# EUROPÄISCHE PATENTSCHRIFT

(11) **EP 2 596 213 B1**
(45) Veröffentlichungstag und Bekanntmachung des Hinweises auf die Patenterteilung: **26.08.2015**
(21) Anmeldenummer: 11732445.9
(22) Anmeldetag: 13.07.2011
(51) Int. Cl.: F01D 3/04, F01D 11/00, F01D 25/14, F02C 7/18

(54) **DAMPFTURBINE MIT EINER INTERNEN KÜHLUNG**
STEAM TURBINE WITH AN INTERNAL COOLING
TURBINE À VAPEUR AVEC UN REFROIDISSEMENT INTERNE

(30) Priorität: 21.07.2010 EP 10007576
(43) Veröffentlichungstag der Anmeldung: 29.05.2013
(73) Patentinhaber: Siemens Aktiengesellschaft, 80333 München (DE)
(72) Erfinder: HOLDER, Martina, 45136 Essen (DE); ZANDER, Uwe, 45475 Mülheim an der Ruhr (DE)
(86) Internationale Anmeldenummer: PCT/EP2011/061952
(87) Internationale Veröffentlichungsnummer: WO 2012/022551

(56) Entgegenhaltungen:
- EP-A1- 1 624 155
- EP-A1- 1 780 376
- EP-A1- 1 806 476
- EP-A2- 2 028 346
- US-A- 2 304 994
- US-A- 2 796 231

## Beschreibung

Die Erfindung betrifft eine Dampfturbine mit einem Außengehäuse und einem Innengehäuse, wobei ein einen Schubausgleichskolben aufweisender Rotor umfassend mehrere Laufschaufeln drehgelagert innerhalb des Innengehäuses angeordnet ist, wobei das Innengehäuse einen um den Schubausgleichskolben ausgebildeten Innengehäuseendbereich aufweist.

Unter einer Dampfturbine im Sinne der vorliegenden Anmeldung wird jede Turbine oder Teilturbine verstanden, die von einem Arbeitsmedium in Form von Dampf durchströmt wird. Im Unterschied dazu werden Gasturbinen mit Gas und/oder Luft als Arbeitsmedium durchströmt, das jedoch völlig anderen Temperatur- und Druckbedingungen unterliegt als der Dampf bei einer Dampfturbine. Im Gegensatz zu Gasturbinen weist bei Dampfturbinen z.B. das einer Teilturbine zuströmende Arbeitsmedium mit der höchsten Temperatur gleichzeitig den höchsten Druck auf. Ein offenes Kühlsystem, das zum Strömungskanal offen ist, ist bei Gasturbinen auch ohne externe Zuführung von Kühlmedium realisierbar. Für eine Dampfturbine sollte eine externe Zuführung für Kühlmedium vorgesehen sein. Der Stand der Technik betreffend Gasturbinen kann schon deswegen nicht für die Beurteilung des vorliegenden Anmeldungsgegenstandes herangezogen werden.

Eine Dampfturbine umfasst üblicherweise einen mit Schaufeln besetzten drehbar gelagerten Rotor, der innerhalb eines Gehäuses bzw. Gehäusemantels angeordnet ist. Bei Durchströmung des vom Gehäusemantel gebildeten Innenraums des Strömungskanals mit erhitztem und unter Druck stehendem Dampf wird der Rotor über die Schaufeln durch den Dampf in Rotation versetzt. Die Schaufeln des Rotors werden auch als Laufschaufeln bezeichnet. Am Innengehäuse sind darüber hinaus üblicherweise stationäre Leitschaufeln aufgehängt, welche entlang einer axialen Ausdehnung des Körpers in die Zwischenräume der Rotorschaufeln greifen. Eine Leitschaufel ist üblicherweise an einer ersten Stelle entlang einer Innenseite des Dampfturbinen-Gehäuses gehalten. Dabei ist sie üblicherweise Teil einer Leitschaufelreihe, welche eine Anzahl von Leitschaufeln umfasst, die entlang eines Innenumfangs an der Innenseite des Dampfturbinen-Gehäuses angeordnet sind. Dabei weist jede Leitschaufel mit ihrem Schaufelblatt radial nach innen. Eine Leitschaufelreihe an der genannten ersten Stelle entlang der axialen Ausdehnung wird auch als Leitschaufelgitter oder - kranz bezeichnet. Üblicherweise ist eine Anzahl von Leitschaufelreihen hintereinander geschaltet. Entsprechend ist an einer zweiten Stelle entlang der axialen Ausdehnung hinter der ersten Stelle eine weitere zweite Schaufel entlang der Innenseite des Dampfturbinen-Gehäuses gehalten. Ein Paar einer Leitschaufelreihe und einer Laufschaufelreihe wird auch als Schaufelstufe bezeichnet.

Der Gehäusemantel einer derartigen Dampfturbine kann aus einer Anzahl von Gehäusesegmenten gebildet sein. Unter dem Gehäusemantel der Dampfturbine ist insbesondere das stationäre Gehäusebauteil einer Dampfturbine oder einer Teilturbine zu verstehen, dass entlang der Längsrichtung der Dampfturbine einen Innenraum in Form eines Strömungskanals aufweist, der zur Durchströmung mit dem Arbeitsmedium in Form von Dampf vorgesehen ist. Dies kann, je nach Dampfturbinenart, ein Innengehäuse und/oder ein Leitschaufelträger sein, welches kein Innengehäuse oder keinen Leitschaufelträger aufweist.

Aus Wirkungsgradgründen kann die Auslegung einer derartigen Dampfturbine für sogenannte "hohe Dampfparameter", also insbesondere hohe Dampfdrücke und/oder hohe Dampftemperatur, wünschenswert sein. Allerdings ist insbesondere eine Temperaturerhöhung aus materialtechnischen Gründen nicht unbegrenzt möglich. Um dabei einen sicheren Betrieb der Dampfturbine auch bei besonders hohen Temperaturen zu ermöglichen, kann daher eine Kühlung einzelner Bauteile oder Komponenten wünschenswert sein. Die Bauteile sind üblicherweise in ihrer Temperaturfestigkeit begrenzt. Ohne effiziente Kühlung würden bei steigenden Temperaturen wesentlich teurere Materialien (z.B. Nickelbasislegierungen) nötig.

Bei den bisher bekannten Kühlmethoden, insbesondere für einen Dampfturbinen-Körper in Form eines Dampfturbinen-Gehäuses oder eines Rotors, ist zwischen einer aktiven Kühlung und einer passiven Kühlung zu unterscheiden. Bei einer aktiven Kühlung wird eine Kühlung durch ein dem Dampfturbinen-Körper separat, d.h. zusätzlich zum Arbeitsmedium zugeführtes Kühlmedium bewirkt. Dagegen erfolgt eine passive Kühlung lediglich durch eine geeignete Führung oder Verwendung des Arbeitsmediums. Bisher wurden Dampfturbinen-Körper vorzugsweise passiv gekühlt.

Zur Erzielung höherer Wirkungsgrade bei der Stromerzeugung mit fossilen Brennstoffen besteht das Bedürfnis, bei einer Turbine höhere Dampfparameter, d.h. höhere Drücke und Temperaturen als bisher üblich anzuwenden. Bei Hochtemperatur-Dampfturbinen sind beim Dampf als Arbeitsmedium Temperaturen zum Teil weit über 500°C vorgesehen.

Die bisher bekannten Kühlverfahren für ein Dampfturbinen-Gehäuse sehen, soweit es sich überhaupt um aktive Kühlverfahren handelt, allenfalls ein gezieltes Anströmen eines separaten und zu kühlenden Turbinenteils vor und sind auf den Einströmbereich des Arbeitsmediums, allenfalls unter Einbeziehung des ersten Leitschaufelkranzes beschränkt. Dies kann bei einer Belastung üblicher Dampfturbinen mit höheren Dampfparametern zu einer auf die ganze Turbine wirkenden erhöhten thermischen Belastung führen, welche durch eine oben beschriebene übliche Kühlung des Gehäuses nur unzureichend vermindert werden könnte. Dampfturbinen, die zur Erzielung höherer Wirkungsgrade grundsätzlich mit höheren Dampfparametern arbeiten, benötigen eine verbesserte Kühlung, insbesondere des Gehäuses und/oder des Rotors, um eine höhere thermische Belastung der Dampfturbine in genügendem Maße zu kompensieren. Dabei besteht das Problem, dass bei der Nutzung bisher üblicher Turbinenmaterialien die zunehmende Beanspruchung des Dampfturbinen-Körpers durch erhöhte Dampfparameter zu einer nachteiligen thermischen Belastung der Dampfturbine führen kann. Mit der Folge, dass eine Herstellung solcher Dampfturbinen kaum mehr möglich ist.

Es ist dazu wichtig, neben dem Rotor und dem Gehäuse einschließlich Schrauben auch die Ventilanbindung selber gegen hohe Temperaturen und hohe Drücke auszulegen.

Im EP1624155 werden die technischen Merkmale vom Oberbegriff vom unabhängigen Vorrichtungsanspruch 1 offenbart.

Es ist Aufgabe der Erfindung eine Dampfturbine anzugeben, die selbst im Hochtemperatur-Bereich besonders effektiv gekühlt werden kann.

Die Aufgabe wird im Vorrichtungsanspruch 1 gelöst.

Vorteilhafte Weiterbildungen sind in den Unteransprüchen angegeben.

In einer vorteilhaften Weiterbildung ist die Dichtung als Kolbenring ausgebildet, was zu einer schnellen und kostengünstigen Fertigung der erfindungsgemäßen Dampfturbine führt.

Die Erfindung geht von dem Gedanken aus, dass eine inhärente Kühlung von Bauteilen möglich ist, in dem eine Strömung über verschiedene Druckniveaus ermöglicht wird. So ist der Druck im ersten Druckraum größer als der Druck im dritten Druckraum. Die Kühlkanäle, die so angeordnet sind, dass sie temperaturbelastete Bauteile umströmen, werden demzufolge mit kühlerem Dampf zwangsumströmt. Die Folge ist, dass eine deutliche Erhöhung des Kühleffektes für Komponenten der Ventilanbindung möglich ist.

Vorteilhafterweise sind die Kühlkanäle zwischen einem Ventildiffusor und dem Außengehäuse angeordnet.

Die Erfindung wird anhand eines Ausführungsbeispieles näher erläutert. Bauteile mit gleichen Bezugszeichen weisen im Wesentlichen die gleiche Wirkungsweise auf. Es zeigen:
- FIG 1: eine Querschnittsansicht einer erfindungsgemäßen Dampfturbine;
- FIG 2: eine Querschnittsansicht im Schnitt durch die Zuströmung der erfindungsgemäßen Dampfturbine.

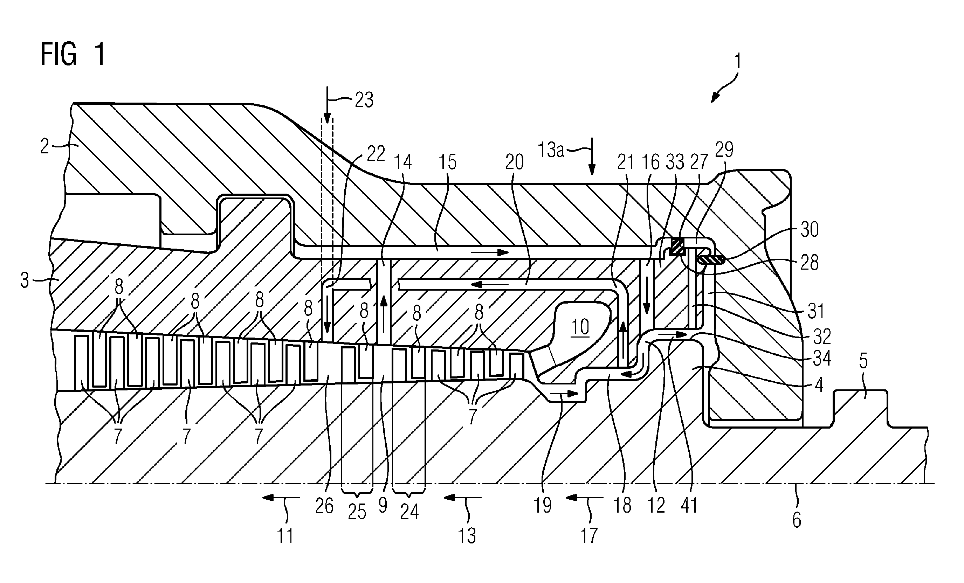

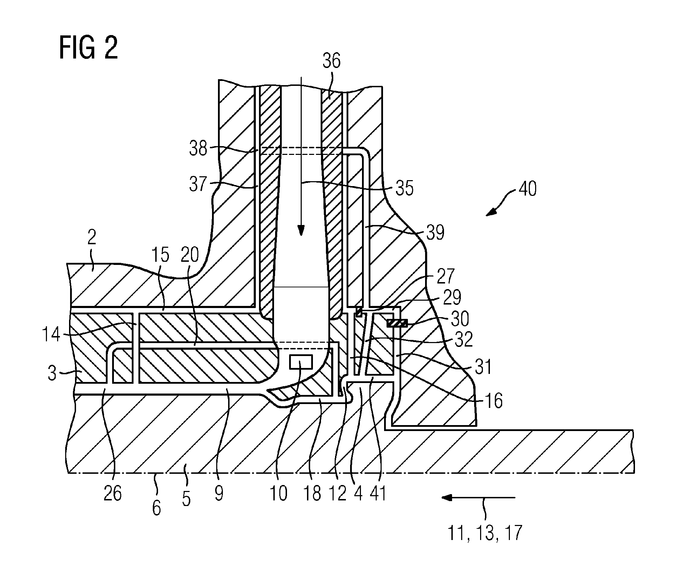

In der FIG 1 ist ein Querschnitt durch eine Dampfturbine 1 dargestellt. Die Dampfturbine 1 weist ein Außengehäuse 2 und ein Innengehäuse 3 auf. Das Innengehäuse 3 und das Außengehäuse 2 weisen einen Frischdampfzuführungskanal auf, der in der FIG 2 näher beschrieben wird. Innerhalb des Innengehäuses 3 ist ein einen Schubausgleichskolben 4 aufweisender Rotor 5 drehgelagert angeordnet. Üblicherweise ist der Rotor um eine Rotationsachse 6 rotationssymmetrisch ausgebildet. Der Rotor 5 umfasst mehrere Laufschaufeln 7. Das Innengehäuse 3 weist mehrere Leitschaufeln 8 auf. Zwischen dem Innengehäuse 3 und dem Rotor 5 wird ein Strömungskanal 9 ausgebildet. Der Strömungskanal 9 umfasst mehrere Schaufelstufen, die jeweils aus einer Reihe Laufschaufeln 7 und einer Reihe Leitschaufeln 8 ausgebildet sind.

Über den Frischdampfzuführungskanal strömt Frischdampf in eine Einströmöffnung 10 und strömt von dort aus in einer Strömungsrichtung 11 durch den Strömungskanal 9, die im Wesentlichen parallel zur Rotationsachse 6 verläuft. Der Frischdampf expandiert und kühlt sich hierbei ab. Thermische Energie wird hierbei in Rotationsenergie umgewandelt. Der Rotor 5 wird in eine Drehbewegung versetzt und kann beispielsweise einen Generator zur elektrischen Energieerzeugung antreiben.

Je nach Beschaufelungstyp der Leitschaufeln 8 und Laufschaufeln 7 entsteht ein mehr oder weniger großer Schub des Rotors 5 in Strömungsrichtung 11. Üblicherweise wird der Schubausgleichskolben 4 derart ausgebildet, dass ein Schubausgleichskolbenvorraum 12 ausgebildet wird. Durch Zuführen von Dampf in den Schubausgleichskolbenvorraum 12 entsteht eine Gegenkraft, die einer Schubkraft 13 des Schaufelpfads entgegenwirkt.

Im Betrieb strömt Dampf in die Einströmöffnung 10. Die Frischdampfzuführung wird symbolisch mit dem Pfeil 13a dargestellt. Der Frischdampf hat hierbei üblicherweise Temperaturwerte von beispielsweise bis zu 625°C und einen Druck von bis zu 350bar. Der Frischdampf strömt in der Strömungsrichtung 11 durch den Strömungskanal 9. Nach einer Schaufelstufe strömt der Dampf über eine Verbindung, die einen Rückführungskanal 14, einen ersten Druckraum 15 und einen Zuführungskanal 16 umfasst, in den Schubausgleichskolbenvorraum 12.

Insbesondere strömt der Dampf über einen Rückführungskanal 14, der als eine kommunizierende Röhre zwischen einem ersten Druckraum 15 zwischen Innengehäuse 3 und Außengehäuse 2 und dem Strömungskanal 9 nach einer Schaufelstufe ausgebildet ist, in den ersten Druckraum 15 zwischen dem Innengehäuse 3 und dem Außengehäuse 2. In diesem ersten Druckraum 15 herrscht ein Druck von p₁. Der im ersten Druckraum 15 zwischen Innengehäuse 3 und Außengehäuse 2 befindliche Dampf weist nun geringere Temperatur- und Druckwerte auf. Dieser Dampf strömt über einen Zuführungskanal 16, der als kommunizierende Röhre zwischen dem ersten Druckraum 16 und dem Schubausgleichskolbenvorraum 12 ausgebildet ist.

Der Schubausgleichskolbenvorraum 12 ist in einer axialen Richtung 17 zwischen dem Schubausgleichskolben 4 und dem Innengehäuse 3 angeordnet. Der Schubausgleichskolbenvorraum 12 kann auch als vierter Druckraum bezeichnet werden. In diesem vierten Druckraum herrscht ein Druck p₄.

Ein in die Einströmöffnung 10 strömender Frischdampf strömt zum größten Teil in Strömungsrichtung 11 durch den Strömungskanal 9. Ein kleinerer Teil strömt als Leckdampf in einen Leck-Dichtraum 18. Der Leckdampf strömt hierbei im Wesentlichen in einer Gegenrichtung 19. Die Gegenrichtung 19 ist hierbei entgegengesetzt zur Strömungsrichtung 11 ausgerichtet. Der Leckdampf strömt über einen Kreuz-Rückführungskanal 20, der als eine kommunizierende Röhre zwischen dem Dichtraum 18, der zwischen dem Rotor 5 und dem Gehäuse 3 ausgebildet ist und einem nach einer Schaufelstufe angeordneten Zuströmraum 26 in den Strömungskanal 9. Der Kreuz-Rückführungskanal 20 ist hierbei vom Dichtraum 18 zum ersten Druckraum 15 hin im Wesentlichen senkrecht, nach einer Umlenkung 21 im Wesentlichen parallel und nach einer zweiten Umlenkung 22 im Wesentlichen senkrecht zur Strömungsrichtung 11 ausgebildet.

In einer alternativen Ausführungsform kann das Innengehäuse 3 und Außengehäuse 2 mit einer nicht näher dargestellten Überlasteinleitung 23 ausgebildet werden. In die Überlasteinleitung 23 strömt externer Dampf.

In einem bevorzugten Ausführungsbeispiel ist der Rückführungskanal 14 mit dem Strömungskanal 9 nach einer Rückführungsschaufelstufe 24 und der Kreuz-Rückführungskanal 20 ist mit dem Strömungskanal 9 nach einer Kreuz-Rückführungs-Schaufelstufe 25 verbunden. Die Kreuz-Rückführungs-Schaufelstufe 25 ist hierbei in der Strömungsrichtung 11 des Strömungskanals 9 hinsichtlich Expansion des Dampfes nach der Rückführungs-Schaufelstufe 24 angeordnet.

In einem besonders bevorzugten Ausführungsbeispiel ist die Rückführungs-Schaufelstufe 24 die vierte Schaufelstufe und die Kreuz-Rückführungs-Schaufelstufe 25 die fünfte Schaufelstufe.

Zwischen dem Innengehäuse 3 und dem Außengehäuse 3 wird im Bereich des Schubausgleichskolbens 4 eine Dichtung 27 angeordnet. Diese Dichtung 27 ist als Kolbenring ausgebildet und in einer Nut 28 im Innengehäuse 3 angeordnet. Die Dichtung 27 trennt hierdurch den ersten Druckraum 15 von einem dritten Druckraum 29. In dem dritten Druckraum 29 herrscht ein Druck p₃. Der dritte Druckraum 29 wird durch eine weitere Dichtung 30 begrenzt. Die weitere Dichtung 30 ist zwischen dem Innengehäuse 3 und dem Außengehäuse 2 angeordnet und trennt den dritten Druckraum 29 von dem vierten Druckraum 31, in dem der Druck p₄ herrscht.

Der dritte Druckraum 29 ist über eine Verbindung 32 mit dem vierten Druckraum 31, der auch als Dichtraum bezeichnet werden kann, verbunden. Die Verbindung 32 stellt eine strömungstechnische Verbindung dar und ermöglicht es, dass ein Dampf, der im dritten Druckraum 29 sich befindet, in den vierten Druckraum 31 strömen kann. Der vierte Druckraum 31 mündet in einen Innengehäuseendbereich 33 auf eine Schubausgleichskolbenoberfläche 34 des Schubausgleichskolbens 4.

Die FIG 2 zeigt einen Querschnitt durch die Dampfturbine 1 im Schnitt durch eine Zuströmung 35. Die Zuströmung 35 umfasst einen Ventildiffusor 36. Hinter dem Ventildiffusors 36 strömt Frischdampf in die Einströmöffnung 10 und von dort, wie zur FIG 1 beschrieben, durch den Strömungskanal 9. Der im ersten Druckraum 15 zugeströmte Dampf kann zum Teil in einen Ring-Kühlkanal 37, der zwischen dem Ventildiffusor 36 und dem Außengehäuse 2 ausgebildet ist, strömen. In einem Umkehrpunkt 38 strömt der Dampf über einen weiteren Kühlkanal 39 im Außengehäuse 2 zu dem dritten Druckraum 29. Vom dritten Druckraum 29 strömt der Dampf über die Verbindung 32 in den vierten Druckraum 31. Da der Druck p₁ > p₃ > p₄ ist, entsteht dadurch eine Zwangsströmung, die die Ventilanbindung 40 vorteilhafterweise kühlt. Somit ist eine effektive Kühlung der Ventilanbindung 40 möglich, ohne externen Kühldampf zu verwenden. Der Ventildiffusor 36 ist hierbei dichtend an das Innengehäuse 3 angeordnet.

Zwischen dem Rotor 5 und dem Innengehäuse 3 sind im Bereich des Schubausgleichskolben 4, insbesondere in dem Leck-Dichtraum 18 und einem zweiten Leck-Dichtraum 41 üblicherweise berührungslose Dichtelemente, wie z.B. Dichtbänder angeordnet, die einen Druckabbau und eine Trennung der Druckräume realisieren.

## Patentansprüche

1. Dampfturbine (1) mit einem Außengehäuse (2) und einem Innengehäuse (3),
wobei ein einen Schubausgleichskolben (4) aufweisender Rotor (5) umfassend mehrere Laufschaufeln (7) drehgelagert innerhalb des Innengehäuses (3) angeordnet ist,
wobei zwischen dem Innengehäuse (3) und dem Rotor (5) ein Strömungskanal (9) mit mehreren Schaufelstufe ausgebildet ist,
wobei das Innengehäuse (3) einen Rückführungskanal (14) aufweist, die als kommunizierende Leitung zwischen dem Strömungskanal (9) nach einer Schaufelstufe und dem ersten Druckraum (15) ausgebildet ist,
wobei der erste Druckraum (15) zwischen dem Innengehäuse (3) und dem Außengehäuse (2) angeordnet ist,
wobei das Innengehäuse (3) ein um den Schubausgleichskolben (4) ausgebildeten Innengehäuseendbereich (33) aufweist, wobei eine Verbindung (32) angeordnet ist, die einen dritten Druckraum (29), der zwischen dem Innengehäuseendbereich (33) und dem Aussengehäuse (2) angeordnet ist,
mit einem vierten Druckraum (31), der zwischen dem Schubausgleichskolben (4) und dem Innengehäuse (3) angeordnet ist, strömungstechnisch verbindet,
wobei eine Dichtung (27) angeordnet ist, die den dritten Druckraum (29) abdichtet, und die den ersten Druckraum (15) vom dritten Druckraum (29) trennt,
wobei ein Ventil zum Zuführen von Dampf in den Strömungskanal (9) angeordnet ist,
**gekennzeichnet durch**
einen Ring-Kühlkanal (37), der in dem Ventil ausgebildet ist, der mit dem ersten Druckraum (15) strömungstechnisch verbunden ist,
wobei der Ring-Kühlkanal (37) mit dem dritten Druckraum (29) strömungstechnisch verbunden ist.

2. Dampfturbine (1) nach Anspruch 1,
wobei die Dichtung (27) als Kolbenring ausgebildet ist.

3. Dampfturbine (1) nach Anspruch 1,
wobei das Innengehäuse (3) einen Zuführungskanal (16) aufweist, der den ersten Druckraum (15) mit einem Schubausgleichskolbenvorraum (12), der zwischen dem Schubausgleichskolben (4) und dem Innengehäuse (3) angeordnet ist, verbindet.

4. Dampfturbine (1) nach einem der vorhergehenden Ansprüche,
wobei das Ventil einen Ventildiffusor (36) umfasst und der Ring-Kühlkanal (37) zwischen dem Ventildiffusor (36) und dem Außengehäuse (2) angeordnet ist.

5. Dampfturbine (1) nach einem der vorhergehenden Ansprüche,
wobei ein weiterer Kühlkanal (39) im Außengehäuse (2) angeordnet ist.

## Claims

1. Steam turbine (1) having an outer housing (2) and an inner housing (3),
a rotor (5), comprising a plurality of rotor blades (7), which has a thrust compensating piston (4) being arranged in a rotationally mounted manner within the inner housing (3), a flow channel (9) having a plurality of blade stages being formed between the inner housing (3) and the rotor (5),
the inner housing (3) having a return channel (14) which is formed as a communicating line between the flow channel (9) downstream of a blade stage and the first pressure space (15), the first pressure space (15) being arranged between the inner housing (3) and the outer housing (2),
the inner housing (3) having an inner housing end region (33) which is configured around the thrust compensating piston (4), a connection (32) being arranged which connects a third pressure space (29), which is arranged between the inner housing end region (33) and the outer housing (2), in terms of flow to a fourth pressure space (31) which is arranged between the thrust compensating piston (4) and the inner housing (3),
a seal (27) being arranged which seals the third pressure space (29) and which separates the first pressure space (15) from the third pressure space (29),
a valve being arranged for feeding steam into the flow channel (9),
**characterized by**
an annular cooling channel (37) which is formed in the valve, which annular cooling channel (37) is connected in terms of flow to the first pressure space (15), the annular cooling channel (37) being connected in terms of flow to the third pressure space (29).

2. Steam turbine (1) according to Claim 1,
the seal (27) being configured as a piston ring.

3. Steam turbine (1) according to Claim 1,
the inner housing (3) having a feed channel (16) which connects the first pressure space (15) to a thrust compensating piston pre-space (12) which is arranged between the thrust compensating piston (4) and the inner housing (3).

4. Steam turbine (1) according to one of the preceding claims,
the valve comprising a valve diffuser (36), and the annular cooling channel (37) being arranged between the valve diffuser (36) and the outer housing (2).

5. Steam turbine (1) according to one of the preceding claims,
a further cooling channel (39) being arranged in the outer housing (2).

## Revendications

1. Turbine (1) à vapeur ayant une carcasse (2) extérieure et une carcasse (3) intérieure,
dans laquelle un rotor (5), ayant un piston (4) de compensation de la poussée et comprenant plusieurs aubes (7) mobiles, est monté tournant à l'intérieur de la carcasse (3) intérieure,
dans laquelle un canal (9) d'écoulement ayant plusieurs étages d'aubes est constitué entre la carcasse (3) intérieure et le rotor (5),
dans laquelle la carcasse (3) intérieure a un canal (14) de retour, qui est constitué sous la forme d'un conduit de communication entre le canal (9) d'écoulement, après un étage d'aubes, et le premier espace (15) de refoulement,
dans laquelle le premier espace (15) de refoulement est disposé entre la carcasse (3) intérieure et la carcasse (2) extérieure,
dans laquelle la carcasse (3) intérieure a une zone (33) d'extrémité constituée autour du piston (4) de compensation de la poussée,
dans laquelle il est prévu une liaison (32), qui met en communication fluidique un troisième espace (29) de refoulement disposé entre la zone (33) d'extrémité de la carcasse intérieure et la carcasse (2) extérieure avec un quatrième espace (31) de refoulement, qui est disposé entre le piston (4) de compensation de la poussée et la carcasse (3) intérieure,
dans laquelle il est disposé une étanchéité (27), qui rend étanche le troisième espace (29) de refoulement et qui sépare le premier espace (15) de refoulement du troisième espace (29) de refoulement,
une vanne étant montée pour l'envoi de vapeur dans le canal (9) d'écoulement,
**caractérisée par**
un canal (37) de refroidissement annulaire, qui est constitué dans la vanne, qui communique fluidiquement avec le premier espace (15) de refoulement,
le canal (37) de refroidissement annulaire communiquant fluidiquement avec le troisième espace (29) de refoulement.

2. Turbine (1) à vapeur suivant la revendication 1,
dans laquelle l'étanchéité (27) est constituée sous la forme d'un segment de piston.

3. Turbine (1) à vapeur suivant la revendication 1,
dans laquelle la carcasse (3) intérieure a un canal (16) d'apport, qui met le premier espace (15) de refoulement en communication avec un espace (12) antérieur de piston de compensation de la poussée, qui est disposé entre le piston (4) de la poussée et la carcasse (3) intérieure.

4. Turbine (1) à vapeur suivant l'une des revendications précédentes,
dans laquelle la vanne comprend un diffuseur (36) de vanne et le canal (37) de refroidissement annulaire est disposé entre le diffuseur (36) de vanne et la carcasse (2) extérieure.

5. Turbine (1) à vapeur suivant l'une des revendications précédentes,
dans laquelle un autre canal (39) de refroidissement est disposé dans la carcasse (2) extérieure.
